**Europäisches Patentamt**

**European Patent Office**

**Office européen des brevets**

(11) Veröffentlichungsnummer: **0 277 534 B1**

(12) **EUROPÄISCHE PATENTSCHRIFT**

(45) Veröffentlichungstag der Patentschrift: **08.01.92**

(51) Int. Cl.⁵: **B23K 26/00**

(21) Anmeldenummer: **88100634.0**

(22) Anmeldetag: **19.01.88**

(54) **Verfahren zur Herstellung eines Behälterrumpfes mit stumpfgeschweisster Längsnaht aus einem Blechzuschnitt und Vorrichtung zur Durchführung des Verfahrens.**

(30) Priorität: **04.02.87 DE 3703270**

(43) Veröffentlichungstag der Anmeldung:
**10.08.88 Patentblatt 88/32**

(45) Bekanntmachung des Hinweises auf die
Patenterteilung:
**08.01.92 Patentblatt 92/02**

(84) Benannte Vertragsstaaten:
**AT BE CH FR GB IT LI NL SE**

(56) Entgegenhaltungen:
**EP-A- 0 147 370**
**DE-C- 3 534 195**
**US-A- 4 436 979**

(73) Patentinhaber: **Fried. Krupp Gesellschaft mit
beschränkter Haftung
Altendorfer Strasse 103
W-4300 Essen 1(DE)**

(72) Erfinder: **Lentz, Norbert, Dr.-Ing.
Lindauhöhe 30
W-4300 Essen 15(DE)**
Erfinder: **Schmidt, Harald, Dipl.-Ing.
Lerchenstrasse 22
W-4300 Essen 1(DE)**

**Beschreibung**

Die Erfindung betrifft ein Verfahren zur Herstellung eines Behälterrumpfes mit stumpfgeschweißter Längsnaht aus einem Zuschnitt gemäß dem Oberbegriff des Anspruchs 1 sowie eine Vorrichtung gemäß dem Oberbegriff des Anspruchs 3 zur Durchführung des Verfahrens.

Aus der US-PS 4 354 090 ist eine Vorrichtung zum Herstellen von Behälterrümpfen mit stumpfgeschweißter Längsnaht bekannt, bei der die Seitenkanten der durch äußere Rollen gehaltenen Blechzuschnitte während ihres Vorschubes in seitlichen Längsnuten einer sog. Z-Schiene geführt werden, wobei sich die beiden Führungsnuten - in Vorschubrichtung der Zuschnitte gesehen - von unterschiedlicher Höhe auf eine gemeinsame Höhe angleichen und der Nutgrund der Führungsnuten über die ganze Länge der Z-Schiene jeweils bis zu einer gemeinsamen Mittelebene reicht. Da die betreffenden Teile des Behälterrumpfes beim Verlassen der Z-Schiene ihre endgültige Form erreichen, liegen die Seitenkanten, durch die äußeren Rollen bedingt, flach aneinander und werden erst anschließend der Wärmeeinwirkung einer Laserquelle ausgesetzt. Da die Seitenkanten beim Einbringen von Wärmeenergie bereits mit einer gewissen Länge aneinander anliegen, findet lediglich ein Schmelz- oder Sublimierschweißen statt, bei dem Werkstoff bis zu Schmelzphase bzw. bis zur Dampfphase erhitzt wird und zum Teil als Metalldampf innerhalb des in der Stoßfuge ausgebildeten "Dampfkanals" entgegen der Schweißrichtung abströmt, an der bereits erstarrten Schweißnaht kondensiert und schließlich selbst zur Schweißnaht erstarrt. Bei höheren Schweißgeschwindigkeiten von über etwa 0,5 m/s kann es dabei zu Turbulenzen im Schmelzbad und damit zu Unregelmäßigkeiten der Schweißnaht kommen.

Aus der EP-OS 0 147 370 ist eine andere Vorrichtung zum Herstellen von Behälterrümpfen mit stumpfgeschweißter Längsnaht bekannt. Die Führungsschiene dieser Vorrichtung weist zwei gleich hoch verlaufende Führungsnuten für die Seitenkanten der Blechzuschnitte auf, die - von der Seite gesehen - einen in Vorschubrichtung zunehmend gekrümmten Verlauf nach unten nehmen. Die Nutgründe weisen einen Abtand voneinander auf, der sich - in Vorschubrichtung der Blechzuschnitte gesehen - von einem endlichen Wert am Anfang der Führungsschiene stetig bis annähernd Null am Ende der Führungsschiene verringert. Nach der Lehre der EP-OS 0 147 370 sollen die Seitenkanten der Zuschnitte aufgrund der geometrischen Verhältnisse nach dem Verlassen der Führungsschiene nach dem anfänglichen In-Kontakt-Kommen längs dem gesamten jeweils aus der Führungsschiene ausgetretenen Abschnitt zwischen dem Ende der Schiene und der Schweißstelle aneinanderliegen. Auch hier hat der die Führungsschiene verlassende Abschnitt des Rumpfes offensichtlich bereits vor dem eigentlichen Fügen seine endgültige geometrische Form erreicht und es kommt auch hier nur zu einem Schmelz- oder Sublimierschweißen mit den bereits angeführten Nachteilen.

Die DE-PS 35 34 195 beschreibt eine Zargenführung an einer Dosenschweißmaschine, bei der die Zwangsführung für die miteinander zu verschweißenden Seitenkanten des Blechzuschnitts durch eine Führungsschiene erfolgt, die aus einer äußeren Schiene, einer inneren Schiene und einer in die äußere Schiene eingesetzten keilförmigen Klinge besteht, an der die Seitenkanten vor der Schweißung entlanggleiten. Beide Schienen verlaufen parallel zur Dosenachse. Deshalb nimmt der jeweils noch nicht geschweißte Teil der Dosenzarge eine konische Form mit geneigter Achse an, wobei die Dosenzarge im Schweißpunkt unter Überwindung entsprechender Verformungskräfte aus der konischen in eine zylindrische Form zu überführen ist. Im übrigen ist die Dosenzarge - abgesehen von ihren Längskanten - an ihrer Innenseite nicht abgestützt, so daß sie insbesondere in ihrem unteren Bereich keine definierte Führung erfährt.

Der Erfindung liegt die Aufgabe zugrunde, ein Verfahren der eingangs genannten Art anzugeben, bei dem die Schweißgeschwindigkeit bei gleichzeitiger Vermeidung von Fehlschweißungen erhöht werden kann. Außerdem soll eine entsprechende Vorrichtung zur Durchführung des Verfahrens geschaffen werden.

Diese Aufgabe wird - soweit sie das Verfahren betrifft - durch die im Anspruch 1 angegebenen Merkmale gelöst. Durch das Erwärmen der Seitenkanten im Punkt ihres Zusammenlaufens auf mindestens Schmiedetemperatur und das gleichzeitige tangentiale Zusammendrücken durch äußere Krafteinwirkung ergibt sich eine innige Verbindung der Kantenbereiche. Je nach Anpreßdruck wird ein größerer oder kleinerer Teil des teigigen bzw. flüssigen Materials nach außen gedrückt, wodurch der theoretische Durchmesser des fertigen Dosenrumpfes etwas geringer ausfällt, als er sich nach der Umfangslänge des Blechzuschnitts ergibt. Es hat sich in überraschender Weise gezeigt, daß auch Zuschnitte mit geringfügigen Unregelmäßigkeiten der Seitenkanten verarbeitet werden können, wobei ein etwaiges z.B. bogenförmiges Übermaß partiell zu einem erhöhten Herausdrücken des erschmolzenen Materials führt. Vorteilhafterweise wird der spitze Winkel, unter dem die Seitenkanten aufeinander zugeführt werden, so gering gewählt, daß die im Übergangsbereich bedingten Formänderungen des Materials im elastischen Bereich bleiben.

Die Vorrichtung zur Durchführung des Verfahrens zeichnet sich durch die im Anspruch 3 angeführten Merkmale aus. Durch die Identität der Außenkontur des Innenführungswerkzeugs mit dem unteren Teil der Innenkontur des fertigen Behälterrumpfes wird vermieden, daß der vorgeformte Zuschnitt insgesamt eine kegelstumpfförmige Form einnimmt, wodurch Probleme bei der Überführung in die zylindrische Form gegeben wären. Bei der Zuführung zur Wärmequelle werden die einzelnen Punkte der Seitenkanten kontinuierlich von einem endlichen Abstand auf den Abstand Null zusammengeführt. Um die Seitenkanten im Punkt ihres Zusammenlaufens zu schweißen, ist auf den Schnittpunkt der durch die Nutgründe der Führungsschiene gegebenen Geraden die Achse einer Wärmequelle, vorzugsweise einer einen Laserstrahl fokussierenden optischen Einrichtung gerichtet.

Zur Erhöhung der notwendigen äußeren Krafteinwirkung und zur Erzeugung einer definierten Form ist in Höhe des Schnittpunkts der durch die Nutgründe gegebenen Geraden ein Kalibrierwerkzeug angeordnet. Mit Rücksicht auf die Zeit zum Erwärmen der Kantenbereiche ist die Wirkebene des Kalibierwerkzeugs vorteilhafterweise unmittelbar hinter diesem Schnittpunkt angeordnet.

Zur Verringerung der Reibung und der Gefahr des Verkratzens der Innenfläche des Dosenrumpfes ist das Innenführungswerkzeug nach Anspruch 6 aus einzelnen Stäben gebildet, die leicht - z.B. zur Veränderung der Führungslänge oder im Fall eines Verschleißes - ausgetauscht und ggf. verstellt werden können.

Die nach Anspruch 7 vorgesehenen Transportrollen machen einen Kettenvorschub in diesem Bereich entbehrlich. Das erste Transportrollenpaar ist durch die Ausbildung entsprechend den Ansprüchen 9 und 10 zugleich in der Lage, einen etwaigen Schneidgrat der Seitenkanten flachzuwalzen, so daß diese leicht fluchtend auf Stoß zusammengeführt werden können.

Dem fluchtenden Zusammenführen der Seitenkanten dient außerdem die nach den Ansprüchen 11 bis 14 vorgesehene Gleitkufe mit dem darunter vorgesehenen Gegenwerkzeug, wobei die Gleitkufe eine Ausnehmung aufweist, um der Wärmeenergie freien Zugang zur Schweißstelle zu ermöglichen. Zur Berücksichtigung verschiedender Blechdicken und Rumpfquerschnitte ist die Gleitkufe in der Höhe und in ihrer Neigung einstellbar.

Das nachgeordnete zweite Transportrollenpaar ist außerdem geeignet, die noch heiße Stumpfquetschnaht zu überrollen und somit Nahtspritzer und Grate die durch das Zusammanquetschen der Seitenkanten entstehen, flachzuwalzen und so eine glatte Stoßnaht zu erzeugen.

Ein Ausführungsbeispiel des Gegenstandes der Erfindung ist in der Zeichnung schematisch dargestellt und wird im folgenden näher erläutert. Es zeigen

Fig. 1     eine Vorrichtung zum Herstellen eines Behälters mit stumpfgeschweißter Längsnaht aus einem Blechzuschnitt in einer Stirnansicht,

Fig. 2     die Vorrichtung in einer teilweise geschnittenen Draufsicht, wobei die äußeren Führungsrollen der Einfachheit halber lediglich in waagerechter Position dargestellt sind,

Fig. 3     die Vorrichtung in einer vereinfachten Seitenansicht, in der die äußeren Führungsrollen lediglich in senkrechter Position dargestellt sind,

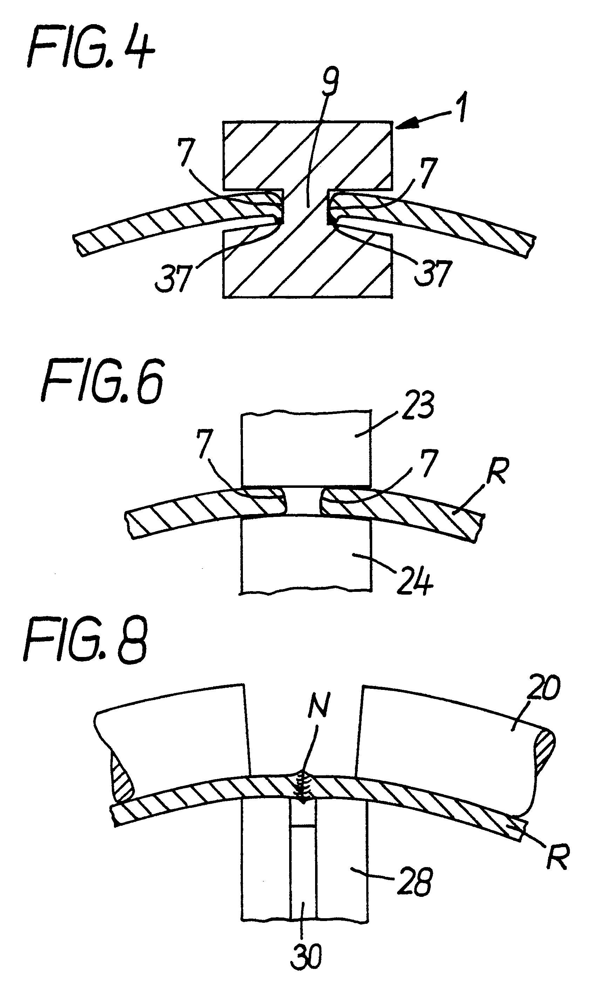

Fig. 4     die Führungsschiene mit im Nutgrund anliegenden Seitenkanten des Zuschnitts in einem Querschnitt längs der Linie IV-IV in Fig. 3,

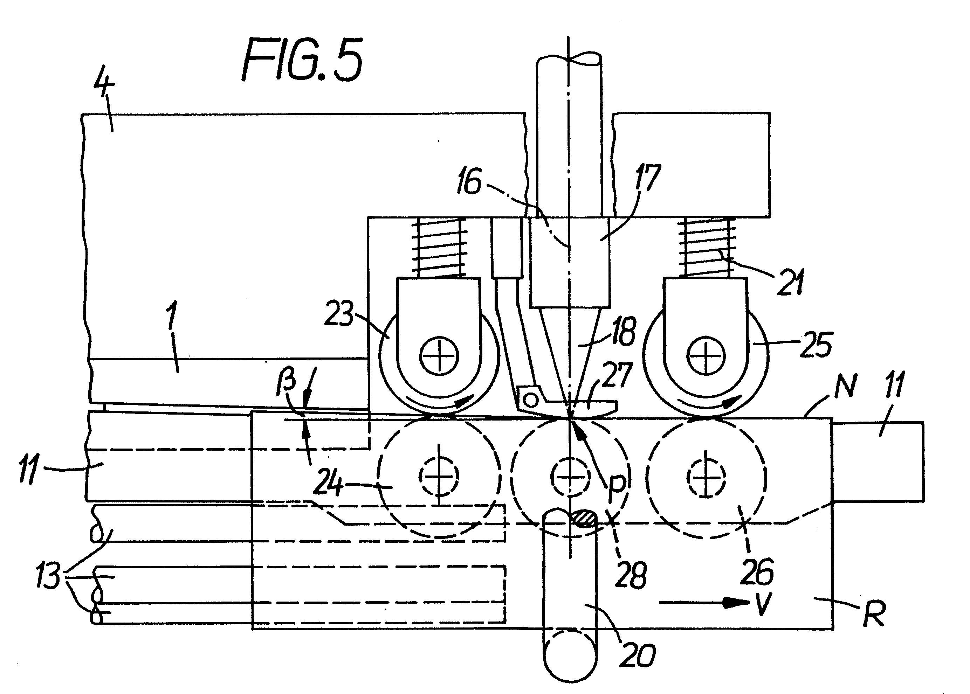

Fig. 5     einen Laserschweißkopf in der Seitenansicht,

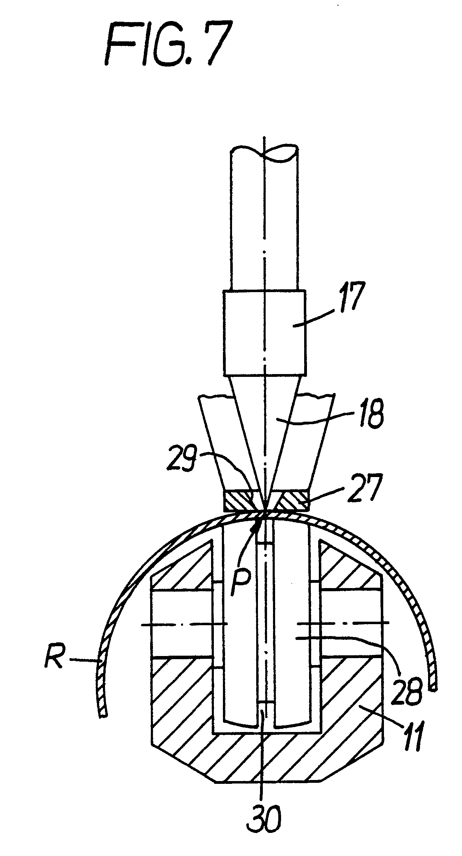

Fig. 6     das in Vorschubrichtung vor der Wärmeeinbringung liegende Transportrollenpaar in einem auszugsweisen Querschnitt,

Fig. 7     den Laserschweißkopf in einem auszugsweisen Querschnitt durch die Achse des Laserstrahls,

Fig. 8     die Vorrichtung in einem auszugsweisen Querschnitt durch die Ebene des Kalibrierwerkzeugs,

Fig. 9     das in Vorschubrichtung hinter der Achse der Wärmeeinbringung gelegene Transportrollenpaar in einem auszugsweisen Querschnitt und

Fig. 10     eine andere Ausführungsform der Aufhängung der Gleitkufe in einer vereinfachten Seitenansicht.

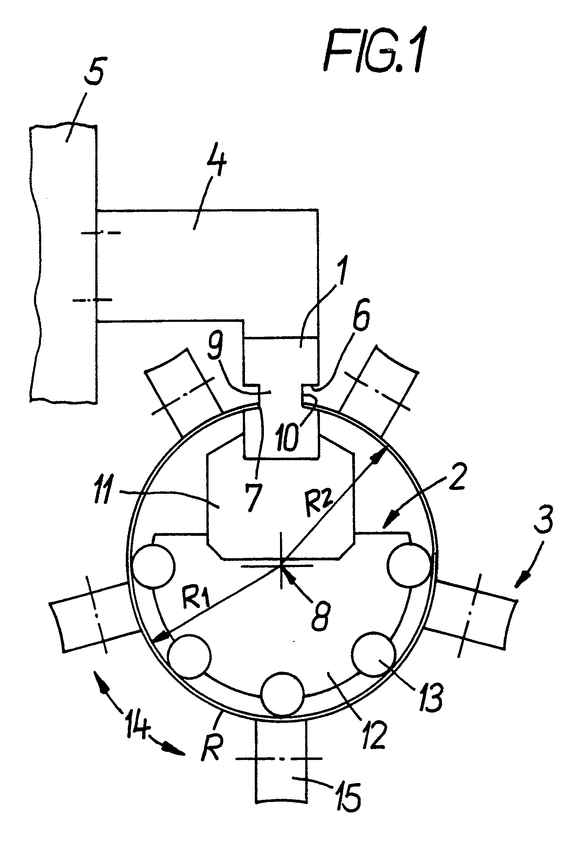

Die Vorrichtung gemäß den Figuren 1 bis 3 weist eine Führungsschiene 1, ein Innenführungswerkzeug 2 und eine äußere Führungsanordnung bzw. ein Außenführungswerkzeug 3 auf.

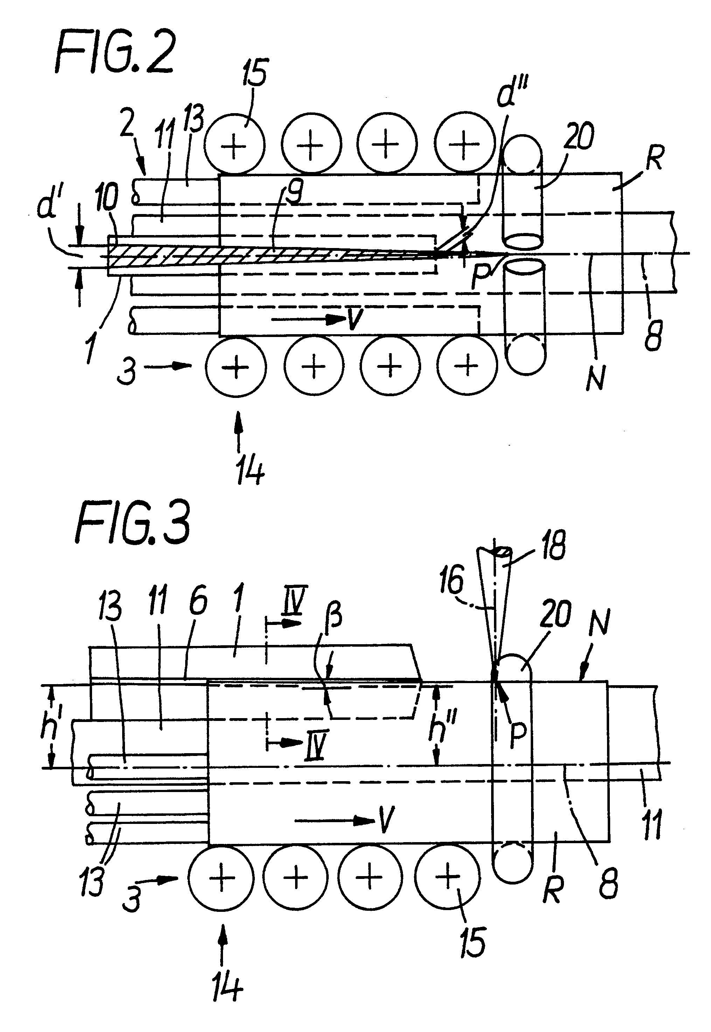

Die Führungsschiene 1 ist über einen Tragarm 4 an dem Maschinengestell 5 befestigt. Sie weist zwei jeweils gleich hoch angeordnete, in sich geradlinig verlaufende seitliche Führungsnuten 6 auf, die am Anfang der Führungsschiene eine Höhe h' von der geometrischen Achse 8 des fertigen Behälter- oder Dosenrumpfes R aufweisen, die höher ist als die entsprechende Höhe h'' am Ende der Führungsschiene 1. Die Führungsnuten 6 sind somit unter einem Winkel $\beta$ gegenüber der geometrischen Achse 8 des fertigen Behälterrumpfes - in Vorschubrichtung V gesehen - geneigt. Durch die Führungsnuten 6 ist ein in Fig. 2 schraffiert dargestellter keilförmiger Steg 9 zwischen dem oberen und dem unteren Teil der Führungsschiene 1 gebildet, der am Anfang eine Dicke d' und am Ende der Führungsschiene eine Dicke d" aufweist. Die geradlinigen Verlängerungen der Nutgründe 10 bzw. der Seitenflächen des keilförmigen Steges 9 laufen in einem gedachten geometrischen Punkt P hinter der Führungsschiene 1 zusamm.

Unten an der Führungsschiene 1 ist ein sog. Unterarm 11 befestigt, an dem wiederum das Innenführungswerkzeug 2 befestigt ist. Dieses besteht aus an Querträgern 12 lösbar befestigten Führungsstangen oder -stäben 13, die untereinander parallel verlaufen und deren Außenkontur insgesamt der Innenkontur des unteren Teils des fertigen Behälterrumpfes R entspricht.

Das Außenführungswerkzeug 3 besteht aus einzelnen hintereinander angeordneten Rollenkränzen 14 mit um das Innenführungswerkzeug 2 angeordneten einzelnen Rollen 15 mit der Außenkontur des Behälterrumpfes R angepaßten Umfangsflächen. Derarige Rollenkränze sind an sich bekannt und z.B. in der US-PS 4 354 090 offenbart.

Die Achse 16 eines optischen Gerätes 17 zur Fokussierung eines Laserstrahls 18 ist auf den Schnittpunkt P gerichtet, der durch die (gedachten) Verlängerungen der Nutgründe 10 der Führungsschiene 1 gegeben ist.

Im Anschluß an die äußeren Rollensätze bzw. Rollenkränze 14 ist ein Kalibrierwerkzeug 20 in Form eines oben offenen Kalibrierrings vorhanden, dessen Innendurchmesser dem Außendurchmesser des fertigen Behälterrumpfes entspricht und dessen durch seinen Innendurchmesser gegebenen Wirkebene unmittelbar hinter dem Schnittpunkt P angeordnet ist, der durch die geradlinigen Verlängerungen der Nutgründe 10 gegeben ist.

In Abwandlung des in den Figuren 2 und 3 dargestellten Kalibrierrings kann das Kalibrierwerkzeug 20 auch als entsprechender (nicht gesondert dargestellter) Rollensatz ausgebildet sein.

Zwischen dem Ende der Führungsschiene 1 und dem Schnittpunkt P ist ein erstes Transportrollenpaar 23, 24 und hinter dem Schnittpunkt P ein zweites Transportrollenpaar 25, 26 angeordnet, deren jeweils untere Rolle 24 bzw. 26 frei drehbar in dem Unterarm 11 gelagert ist und deren jeweils obere Rolle 23 bzw. 25 mit einem (nicht dargestellten) Antrieb verbunden und durch eine Feder 21 kraftbeaufschlagt gegen die untere Rolle 24 bzw. 26 drückt. Die unteren oder inneren Rollen 24, 26 weisen eine Umfangsfläche auf, die der Innenkontur des fertigen Behälterrumpfes R angepaßt ist. Die gefederten oberen oder äußeren Rollen 23, 25 weisen eine zylindrische Umfangsfläche auf. In Abwandlung dieser Ausführungsform können die äußeren Rollen 23, 25 aber auch der Außenkontur der fertigen Behälterrümpfe R angepaßt und z.B. konkav ausgebildet sein.

Um die durch das Außenführungswerkzeug 2 zusammengedrückten Abschnitte der Seitenkanten 7 des Behälterrumpfes R der Wärmeeinwirkung in vertikaler Richtung exakt zuführen zu können, befindet sich unter der optischen Einrichtung 17 eine Gleitkufe 27, unter der wiederum eine Gegenrolle 28 frei drehbar im Unterarm 11 gelagert ist. Dabei besitzt die Gleitkufe 27 eine Ausnehmung 29, um dem Laserstrahl 18 freien Zugang zu der Schweißstelle zu ermöglichen. Die Gegenrolle 28 ist mit einer Umfangsnut 30 versehen.

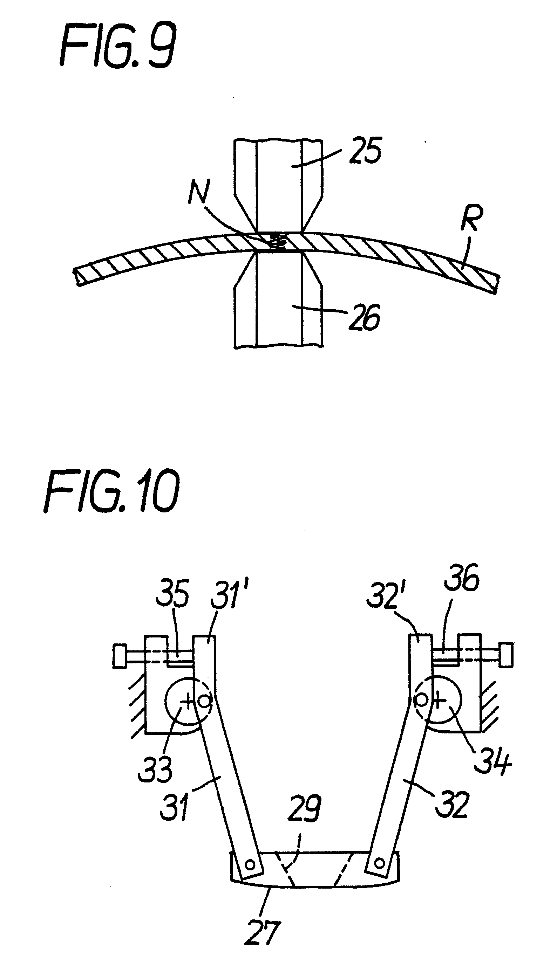

Bei einer besonderen Ausführungsform ist die Gleitkufe 27 an zwei Hebeln bzw. Armen 31, 32 angelenkt, die wiederum jeweils an einem Exzenter 33 bzw. 34 gelagert sind (vgl. Fig. 10). Wird der linke Exzenter 33 beispielsweise entgegen dem Uhrzeigersinn gedreht, so wird die linke Seite der Gleitkufe 27 angehoben. Wird der rechte Exzenter 34 beispielsweise entgegen dem Uhrzeigersinn gedreht, so wird die rechte Seite der Gleitkufe 27 abgesenkt, so daß die Gleitkufe 27 insgesamt - in Vorschubrichtung V gesehen - geneigt wird. Durch individuelles Drehen der Exzenter 33, 34 kann die Gleitkufe 27 aber auch bei waagerechter Ausrichtung abgesenkt oder angehoben oder entgegen der Vorschubrichtung geneigt werden. Die Hebel bzw. Arme 31, 32 weisen Verlängerungen 31' bzw. 32' auf, die von Stellschrauben 35, 36 beaufschlagt werden können. Zum Einstellen der gewünschten Lage der Gleitkufe 27 werden die Stellschrauben 35, 36 zunächst zurückgedreht, so daß die Hebel 31, 32 bewegbar sind. Nach der Einstellung werden die Stellschrauben 35, 36 entsprechend wieder an die Verlängerungen 31', 32' herangeschraubt.

Vorgeformte Blechzuschnitte werden von einer (nicht dargestellten) konventionellen Walzenrundbiegemaschine gerundet und axial hintereinander in eine (nicht dargestellte) Zwischenführung übergeben, von der sie zwischen das Innenführungswerkzeug 2 und das Außenführungswerkzeug 3 gelangen, wobei die Seitenkanten 7 durch das Außenführungswerkzeug 3 in den Nutgrund 9 der Führungsnuten 6 der Führungsschiene 1 gedrückt werden. Während der untere Teil der vorgeformten Behälterrümpfe R über die ganze Länge des Innenführungswerkzeugs 2 bereits seine endgültige Form, die durch den Radius R1 gegeben ist, einnimmt, ergibt sich für den oberen Teil der vorgeformten Dosenrümpfe ein mittlerer Radius R2, der sich für die einzelnen Abschnitte des vorgeformten Dosenrumpfes in Abhängigkeit von der Breite des Steges 9 und damit in Abhängigkeit vom Vorschubweg ergibt. Während die untere Hälfte des vorgeformten Dosenrumpfes exakt horizontal bewegt wird, läuft die obere Hälfte mit den Seitenkanten 7 auf einer leichten Schräge in den Nuten 6 in Richtung auf die geometrische Achse 8 des fertigen Behälterrumpfes, während sich der jeweilige Abstand der Seitenkanten entsprechend der Form des Steges 9 der Führungsschiene 1 zunehmend bis zur Schweißstelle verringert. An der Schweißstelle werden die Seitenkanten 7 zusammengeführt, so daß sich hinter der Schweißstelle eine durchgehend kreisrunde Form mit dem konstanten Radius R1 einstellt. Auf die gleiche Weise, wie das tangentiale Zusammenführen der Seitenkanten 7 durch die Durchmesserverringerung des oberen Teils des Behälterrumpfes R bewirkt wird, wird auch das tangentiale Zusammendrücken der durch den Laserstrahl in teigigen oder schmelzflüssigen Zustand versetzten Bereiche der Seitenkanten zu einer Stumpfquetschnaht N (vgl. Fig. 8) durchgeführt. Dies bedeutet, daß die fertige Form des Behälterrumpfes nicht schon an der Stelle des Auftreffpunktes des Laserstrahls 18 der identisch ist mit der Stelle der ersten Berührung der Seitenkanten 7 bzw. mit dem Schnittpunkt P, erreicht ist, sondern erst kurz dahinter. Die zum tangentialen Zusammenquetschen der Stoßnaht und damit zur Durchmesserreduzierung notwendige Preßkraft auf die zu verbindenden Seitenkantenteile wird weitgehend dadurch erreicht, daß der vorgeformte Behälterrumpf durch das Kalibrierwerkzeug 20 läuft, dessen Innendurchmesser dem Außendurchmesser des fertigen Behälterrumpfes nach der Preßschweißung entspricht.

Die Umfangsnut 30 der Rolle 28 ist dabei einerseits so ausgelegt, daß der überstehende Quetschgrat der Naht N "eintauchen" kann. Zum anderen ist die Tiefe der Umfangsnut 28 derart, daß der Nutgrund - für den Fall, daß kein Blech über der Rolle 28 vorhanden ist - von dem Laserstrahl 18 in bereits wieder defokussiertem Zustand mit geringer Energiedichte getroffen wird.

Zum Transport der vorgeformten Behälterrümpfe ist eine (nicht dargestellte) Transportkette bekannter Art vorgesehen. Die Behälterrümpfe R werden unter dem Laserstrahl 18 mit konstanter Geschwindigkeit durch die Transportkette geschoben und/oder durch die Transportrollenpaare 23, 24 und 25, 26 durchgeschoben bzw. gezogen. Während das erste Rollenpaar 23, 24 einen etwa vorhandenen Schneidgrat 37 der Seitenkanten 7 flachwalzt, wird die noch heiße Stumpfquetschnaht N von dem zweiten Rollenpaar 25, 26 überrollt und geglättet.

Das Flachwalzen der Seitenkanten 7 durch das erste Rollenpaar 23, 24, erleichtert es, die Seitenkanten 7 auf Stoß fluchtend zusammenzuführen. Dies geschieht zwischen der Gleitkufe 27 und der Gegenrolle 28, wobei die Gleitkufe 27 den technologischen Erfordernissen entsprechend in der Höhe und der Neigung eingestellt werden kann.

**Patentansprüche**

1. Verfahren zum Herstellen eines Behälterrumpfes (R) mit stumpfgeschweißter Längsnaht (N) aus einem Blechzuschnitt, wobei der Blechzuschnitt derart vorgeformt ist, daß dessen Seitenkanten (7) über die ganze Länge einen gleichmäßigen Abstand zueinander aufweisen und jeweils gleichweit von der geometrischen Achse (8) des fertigen Dosenrumpfes (R) entfernt sind, **dadurch gekennzeichnet,** daß die derart vorgeformten Zuschnitte beim Vorschub in Richtung der geometrischen Achse derart seitlich gesehen geradlinig zwangsgeführt werden, daß ihre Seitenkanten (7) am Anfang leicht über und am Ende in Höhe der endgültigen Form des fertigen Behälterrumpfes (R) liegend - zunächst insgesamt und nach der Berührung ihrer in Vorschubrichtung vorne liegenden Punkte deren jeweils noch auf gegenseitigen Abstand befindliche Abschnitte - in ihrer eigenen gedachten Verlängerung unter einem spitzen Winkel in einem Punkt (P) aufeinander zulaufen und daß die Seitenkanten (7) im Punkt des Zusammenlaufens durch Wärmeeinwirkung auf mindestens Schmiedetemperatur gebracht und vor dem Abkühlen auf Erstarrungstemperatur durch soweit anhaltende Zwangsführung tangential zusammengepreßt werden, die auch eine Innenführung (2) mit dem unteren Teil der Innenkontur des fertigen Behälterrumpfes (R) entsprechend gleichbleibender Außenkontur umfaßt.

2. Verfahren nach Anspruch 1, dadurch gekennzeichnet, daß zur Wärmeeinwirkung mindestens ein fokussierter Laserstrahl verwendet wird.

3. Vorrichtung zur Durchführung des Verfahrens nach Anspruch 1 oder 2 mit
   - einer äußeren Führungsanordnung (3),
   - einer oben angeordneten Führungsschiene (1) mit zwei seitlichen, jeweils in gleicher Höhe angeordneten Führungsnuten (6), deren Nutgründe (10) - in waagerechter Ebene - untereinander einen Abstand voneinander aufweisen, der von einem am Anfang der Führungsschiene (1) vorhandenen Wert zum Ende hin stetig abnimmt,
   - und mit einer - wiederum in Vorschubrichtung gesehen - hinter der Führungsschiene (1) angeordneten Wärmequelle (17), wobei
   - die Führungsnuten (6) - seitlich gesehen - in sich jeweils einen geradlinigen Verlauf haben und deren Nutgründe (10) am Ende untereinander einen von Null verschiedenen endlichen Abstand (d") aufweisen,

- der Führungsschiene (1) ein Innenführungswerkzeug (2) zugeordnet ist,
- die äußere Führungsanordnung (3) - in Vorschubrichtung (V) gesehen - mindestens bis zu dem Schnittpunkt (P) der durch die Nutgründe (10) gegebenen Geraden reicht und
- die Achse (16) der Wärmequelle (17) auf den Schnittpunkt (P) der durch die Nutgründe (10) gegebenen Geraden gerichtet ist,

**dadurch gekennzeichnet,** daß die Führungsnuten (6) - in Vorschubrichtung gesehen - am Anfang leicht über und am Ende in Höhe der endgültigen Form des fertigen Behälterrumpfes (R) liegen und das Innenführungswerkzeug in Vorschubrichtung eine gleichbleibende Außenkontur besitzt, die dem unteren Teil der Innenkontur des fertigen Behälterrumpfes (R) entspricht.

4. Vorrichtung nach Anspruch 3, dadurch gekennzeichnet, daß auf den Schnittpunkt (P) der durch die Nutgründe (10) gegebenen Geraden die Achse (16) mindestens einer einen Laserstrahl (18) fokussierenden optischen Einrichtung (17) gerichtet ist.

5. Vorrichtung nach Anspruch 3, dadurch gekennzeichnet, daß die äußere Führungsanordnung (3) - in Vorschubrichtung gesehen - in Höhe des Schnittpunkts (P) der durch die Nutgründe (10) gegebenen Geraden ein Kalibrierwerkzeug (20) aufweist, dessen Innenkontur der Außenkontur des fertigen Behälterrumpfes entspricht.

6. Vorrichtung nach Anspruch 3, dadurch gekennzeichnet, daß das Innenführungswerkzeug (2) aus parallel zur Vorschubrichtung verlaufenden Stäben (13) gebildet ist.

7. Vorrichtung nach Anspruch 3, dadurch gekennzeichnet, daß - in Vorschubrichtung gesehen - vor und nach dem Schnittpunkt (P) der durch die Nutgründe (10) gegebenen Geraden je ein Transportrollenpaar (23, 24; 25, 26) angeordnet ist.

8. Vorrichtung nach Anspruch 7, dadurch gekennzeichnet, daß die jeweils äußere Rolle (23, 25) der Transportrollenpaare in Richtung auf die jeweils innere Rolle (24, 26) kraftbeaufschlagt und mit einem Antrieb verbunden ist und daß die jeweils innere Rolle (24, 26) frei drehbar gelagert ist.

9. Vorrichtung nach Anspruch 7 oder 8, dadurch gekennzeichnet, daß die Umfangsfläche der jeweils inneren Rollen (24, 26) der Innenkontur des fertigen Behälterrumpfes angepaßt ist.

10. Vorrichtung nach einem der Ansprüche 7 oder 8, dadurch gekennzeichnet, daß die Umfangsfläche der jeweils äußeren Rollen (23, 25) zylindrisch oder der Außenkontur des fertigen Behälterrumpfes angepaßt ist.

11. Vorrichtung nach Anspruch 3, dadurch gekennzeichnet, daß im Bereich des Schnittpunkts (P) der durch die Nutgründe (10) gegebenen Geraden eine äußere Gleitkufe (27) mit einem Durchlaß (29) im Bereich der Achse (16) der Wärmequelle (17) und ein entsprechendes inneres Gegenwerkzeug (28) angeordnet ist.

12. Vorrichtung nach Anspruch 11, dadurch gekennzeichnet, daß das Gegenwerkzeug (28) als frei drehbare Rolle mit einer Umfangsnut (30) ausgebildet ist.

13. Vorrichtung nach Anspruch 11, dadurch gekennzeichnet, daß die Gleitkufe (27) in der Neigung verstellbar ist.

14. Vorrichtung nach Anspruch 11, dadurch gekennzeichnet, daß die Gleitkufe (27) in der Höhe verstellbar ist.

## Claims

1. A method of producing a container body (R) having a buttwelded longitudinal seam (N) from a sheet metal blank, said sheet metal blank being so preshaped that its lateral edges (7) are at a uniform distance from one another over the whole length and are each at an equal distance from the geometrical axis (8) of the finished container body (R), characterized in that when being advanced in the direction of the geometrical axis, the blanks thus preshaped are constrainedly guided rectilinearly, viewed laterally, in such a way that their lateral edges (7), initially disposed slightly above and finally at the level of the final shape of the finished container body (R), at first as a whole and, after their leading points in the direction of advance have contacted, each of their portions still disposed at a distance from one another converge with one another at an acute angle in their own imaginary prolongation at a point (P), and at the point of convergence the lateral edges (7) are heated to at least forging temperature and prior to cooling to solidification temperature said edges are pressed together tangentially by still continued constrained guiding, which also comprises an inner guide (2) having a constant external contour corresponding to the lower portion of the internal contour of the finished container body (R).

2. A method according to claim 1, characterized in that the action of heat used is at least one focused laser beam.

3. An apparatus for the performance of the method according to claims 1 or 2 having:

- an outer guide arrangement (3),
- an upper guide rail (1) formed with two lateral guide grooves (6) which are each disposed at the same level and whose groove bottoms (10), viewed in the horizontal plane, are at a distance from one another which steadily decreases from a value at the start of the guide rail (1) in the direction of its end,
- and a heat source (17) disposed behind the guide rail (1), again viewed in the direction of advance,
- the guide grooves (6), viewed laterally, each following a rectangular course and their groove bottoms (10) having at the end a finite distance (d") from one another differing from zero,
- an inner guide tool (2) is associated with the guide rail (1),
- while the outer guide arrangement (3) viewed in the direction of advance (V), extends at least as far as the point of intersection (P) of the straight lines given by the groove bottoms (10), and
- the axis (16) of the heat source (17) is directed at the point of intersection (P) of the straight lines given by the groove bottoms (10),

characterized in that the guide grooves (6), viewed in the direction of advance, are disposed initially slightly above and finally at the level of the final shape of the finished container body (R), and the inner guide tool has in the direction of advance a constant external contour which corresponds to the lower portion of the internal contour of the finished container body (R).

4. An apparatus according to claim 3, characterized in that the axis (16) of at least one optical device (17) focusing a laser beam (18) is directed at the point of intersection (P) of the straight lines given by the groove bottoms (10).

5. An apparatus according to claim 3, characterized in that the outer guide arrangement (3), viewed in the direction of advance, has at the level of the point of intersection (P) of the straight lines given by the groove bottoms (10) a calibrating tool (20) whose internal contour corresponds to the external contour of the finished container body.

6. An apparatus according to claim 3, characterized in that the inner guide tool (2) is formed by rods (13) extending parallel with the direction of advance.

7. An apparatus according to claim 3, characterized in that a pair of conveying rollers (23, 24; 25, 26) is disposed, viewed in the direction of advance, preceding and following the point of intersection (P) of the straight lines given by the groove bottoms.

8. An apparatus according to claim 7, characterized in that each outer roller (23, 24) of the pairs of conveying rollers is acted upon by force in the direction of the particular inner roller (24, 26) and is connected to a drive, each inner roller (24, 26) being freely rotatably mounted.

9. An apparatus according to claims 7 or 8, characterized in that the peripheral surface of each of the inner rollers (24, 26) is adapted to the internal contour of the finished container body.

10. An apparatus according to one of claims 7 or 8, characterized in that the peripheral surface of each outer roller (23, 25) is cylindrical or adapted to the external contour of the finished container body.

11. An apparatus according to claim 3, characterized in that an outer skid (27) having a passage (29) in the zone of the axis (16) of the heat source (17) and a corresponding inner matching tool (28) are disposed in the zone of the point of intersection (P) of the straight lines given by the groove bottoms (10).

12. An apparatus according to claim 11, characterized in that the matching tool (28) takes the form of a freely rotatable roller formed with a peripheral groove (30).

13. An apparatus according to claim 11, characterized in that the inclination of the skid (27) is adjustable.

14. An apparatus according to claim 11, characterized in that the skid (27) is vertically adjustable.

**Revendications**

1. Procédé de fabrication d'un corps de récipient (R) avec soudure longitudinale bord à bord (N), réalisé à partir d'une pièce de tôle découpée, pour lequel la pièce de tôle découpée est préformée de telle façon que ses aretes latérales (7) présentent, sur toute leur longueur, une distance égale l'une par rapport à l'autre, et soient situées chacune à une distance égale de l'axe géométrique (8) du corps de récipient (R) terminé, caractérisé en ce que la pièce de tôle découpée ainsi préformée, lors de son avancement suivant la direction de l'axe géométrique, est guidée en ligne droite, en regardant latéralement, de telle façon que ses aretes latérales (7), se trouvant au début légèrement l'une au dessus de l'autre, puis, à la fin, à la hauteur de la forme définitive du corps de récipient (R) terminé, - d'abord totalement, et après contact de leurs points situés en avant dans le sens de l'avancement, de chacune de leurs parties se trouvant encore à une certaine distance par rapport au côté opposé - concourrent l'une avec l'autre en un point de rencontre (P), dans leur propre prolongement imaginaire, en faisant un angle aigu, et en ce que les aretes latérales (7), au point de rencontre, sont portées par l'action de la chaleur, au moins à la temperature de forgeage, et, avant leur refroidissement à la temperature de solidification, sont pressées ensemble tangentiellement au moyen d'un guidage à force, maintenu d'une façon suffisante, et qui entoure également un guidage interne (2) avec la partie inférieure du contour intérieur du corps de récipient terminé (R), en s'adaptant au contour extérieur restant le même.

2. Procédé suivant la revendication 1, caractérisé en ce que, pour mettre en oeuvre l'énergie calorifique, on utilise au moins un rayon laser focalisé.

3. Dispositif pour la mise en oeuvre du procédé suivant la revendication 1 ou la revendication 2, comportant
   - un dispositif de guidage extérieur (3),
   - un rail de guidage (1), disposé en haut, comportant deux rainures de guidage (6) latérales, disposées chacune à la même hauteur, dont les fonds de rainure (10) présentent entre eux - dans un plan horizontal - une distance l'un par rapport à l'autre qui décroît de façon continue jusqu'à l'extrémité, en partant d'une certaine valeur au début du rail de guidage (1),
   - et comportant une source de chaleur (17) disposée - de nouveau dans le sens de l'avancement - en arrière du rail de guidage (1),
   étant entendu que
   - les rainures de guidage (6) - en regardant de profil - suivent en elles-même chacune une trajectoire rectiligne et que leur fonds de rainure (10) présentent entre eux, à leur extrémité, une distance finale (d") différente de zero,
   - au rail de guidage (1) est associé un outil de guidage interne (2),
   - le dispositif de guidage extérieur (3) - dans le sens (V) de l'avancement - arrive au moins jusqu'au point de rencontre (P) des droites formées par les fonds de rainure (10), et
   - l'axe (16) de la source de chaleur (17) est dirigé vers le point de rencontre (P) des droites formées par les fonds de rainure (10),
   caractérisé en ce que les rainures de guidage (6) - dans la direction de l'avancement - se trouvent au début légèrement au dessus et, à la fin, à la hauteur de la forme définitive du corps de récipient (R) terminé, et que l'outil de guidage interne possède, dans le sens de l'avancement, un contour extérieur constant, correspondant à la partie inférieure du contour intérieur du corps de récipient terminé (R).

4. Dispositif suivant la revendication 3, caractérisé en ce que l'axe (16) d'au moins un dispositif optique (17) focalisant un rayon laser (18) est dirigé sur le point de rencontre (P) des droites formées par les fonds de rainure (10).

5. Dispositif suivant la revendication 3, caractérisé en ce que le dispositif extérieur de guidage (3) - en regardant dans le sens de l'avancement - présente, à la hauteur du point de rencontre (P) des droites formées par les fonds de rainure (10), un outil de calibrage (20) dont le contour intérieur correspond au contour extérieur du corps de récipient terminé.

6. Dispositif suivant la revendication 3, caractérisé en ce que l'outil de guidage interne (2) est formé de barres (13) ayant une direction parallèle à la direction d'avancement.

7. Dispositif suivant la revendication 3, caractérisé en ce que - en regardant dans le sens de l'avancement - chaque fois, un couple de rouleaux de transport (23, 24; 25, 26) est disposé l'un avant et l'autre après le point de rencontre (P) des droites formées par les fonds de rainure (10).

8. Dispositif suivant la revendication 7, caractérisé en ce que chacun des rouleaux extérieurs (23, 25) des couples de rouleaux de transport est soumis à une force en direction de chacun des rouleaux intérieurs correspondants (24, 26) et est raccordé à un entrainement, et en ce que chacun des rouleaux intérieurs (24, 26) est monte tournant librement.

9. Dispositif suivant la revendication 7 ou la revendication 8, caractérisé en ce que la surface périphérique de chacun des rouleaux intérieurs (24, 26) est ajustée au contour intérieur du corps de récipient terminé.

10. Dispositif suivant l'une quelconque des revendications 7 ou 8, caractérisé en ce que la surface périphérique de chacun des rouleaux extérieurs (23, 25) est cylindrique ou est ajustée au contour extérieur du corps de récipient terminé.

11. Dispositif suivant la revendication 3, caractérisé en ce que, dans la zone du point de rencontre (P) des droites formées par les fonds de rainure (10), un patin extérieur de glissement (27), comportant un percement (29), et un contreoutil interieur (28) correspondant sont disposés dans la zone de l'axe (16) de la source de chaleur (17).

12. Dispositif suivant la revendication 11, caractérisé en ce que le contre-outil (28) est réalisé sous la forme d'un rouleau tournant librement, comportant une rainure périphérique (30).

13. Dispositif suivant la revendication 11, caractérisé en ce que le patin de glissement (27) peut être reglé en inclinaison.

14. Dispositif suivant la revendication 11, caractérisé en ce que le patin de glissement (27) peut être reglé en hauteur.

FIG.1

FIG.2

FIG.3

## FIG.4

## FIG.6

## FIG.8

# FIG.5

EP 0 277 534 B1

# FIG. 7

## FIG.9

## FIG.10